# EUROPÄISCHE PATENTSCHRIFT

(11) **EP 2 156 024 B1**
(45) Veröffentlichungstag und Bekanntmachung des Hinweises auf die Patenterteilung: **13.07.2011**
(21) Anmeldenummer: 08735819.8
(22) Anmeldetag: 04.04.2008
(51) Int. Cl.: F01N 3/20, F01N 9/00, F01N 11/00

(54) **DIAGNOSEVERFAHREN FÜR EIN IN EINEN ABGASBEREICH EINER BRENNKRAFTMASCHINE EINZUBRINGENDES REAGENZMITTEL UND VORRICHTUNG ZUR DURCHFÜHRUNG DES VERFAHRENS**
DIAGNOSTIC METHOD FOR A REAGENT MATERIAL TO BE INTRODUCED INTO AN EXHAUST GAS REGION OF AN INTERNAL COMBUSTION ENGINE AND DEVICE FOR PERFORMING THE METHOD
PROCÉDÉ DE DIAGNOSTIC POUR UN RÉACTIF DEVANT ÊTRE INTRODUIT DANS LA ZONE DES GAZ D'ÉCHAPPEMENT D'UN MOTEUR À COMBUSTION INTERNE ET DISPOSITIF PERMETTANT DE METTRE EN OEUVRE CE PROCÉDÉ

(30) Priorität: 14.05.2007 DE 102007022594
(43) Veröffentlichungstag der Anmeldung: 24.02.2010
(73) Patentinhaber: Robert Bosch GmbH, 70442 Stuttgart (DE)
(72) Erfinder: PRAKASH, K.G., Bangalore 560069 (IN); LORENZ, Thomas, 71384 Weinstadt (DE)
(86) Internationale Anmeldenummer: PCT/EP2008/054078
(87) Internationale Veröffentlichungsnummer: WO 2008/138682

(56) Entgegenhaltungen:
- EP-A- 1 426 575
- WO-A-2007/037730

## Beschreibung

### Stand der Technik

### Offenbarung der Erfindung

Die Erfindung geht aus von einem Diagnoseverfahren für ein in einen Abgasbereich einer Brennkraftmaschine einzubringendes Reagenzmittel und von einer Vorrichtung zur Durchführung des Verfahrens nach der Gattung der unabhängigen Ansprüche.

Gegenstand der vorliegenden Erfindung sind auch ein Steuergerätprogramm sowie ein Steuergerät-Programmprodukt.

In der DE 199 03 439 A1 werden ein Verfahren und eine Vorrichtung zum Betreiben einer Brennkraftmaschine beschrieben, in deren Abgasbereich ein SCR-Katalysator (Selective-Catalytic-Reduction) angeordnet ist, der die im Abgas der Brennkraftmaschine enthaltenen Stickoxide mit einem Reagenzmittel zu Stickstoff reduziert. Die Dosierung des Reagenzmittels erfolgt vorzugsweise in Abhängigkeit von Betriebskenngrößen der Brennkraftmaschine, wie beispielsweise der Drehzahl und der eingespritzten Kraftstoffmenge. Weiterhin erfolgt die Dosierung vorzugsweise in Abhängigkeit von Abgas-Betriebskenngrößen, wie beispielsweise der Abgastemperatur oder der Betriebstemperatur des SCR-Katalysators.

Als Reagenzmittel ist beispielsweise das Reduktionsmittel Ammoniak vorgesehen, das aus einer Harnstoff-Wasser-Lösung gewonnen werden kann. Die Dosierung des Reagenzmittels oder von Ausgangsstoffen des Reagenzmittels muss sorgfältig festgelegt werden. Eine zu geringe Dosierung hat zur Folge, dass Stickoxide im SCR-Katalysator nicht mehr vollständig reduziert werden können. Eine zu hohe Dosierung führt zu einem Reagenzmittelschlupf, der einerseits zu einem unnötig hohen Reagenzmittelverbrauch und andererseits, in Abhängigkeit von der Beschaffenheit des Reagenzmittels, zu einer unangenehmen Geruchsbelästigung führen kann. Weiterhin muss berücksichtigt werden, dass Ammoniak giftig ist.

Aus der DE 10 2004 031 624 ist ein Verfahren zum Betreiben eines zur Reinigung des Abgases einer Brennkraftmaschine verwendeten SCR-Katalysators beschrieben, bei dem eine Steuerung oder Regelung des Reagenzmittel-Füllstands im SCR-Katalysator auf einen vorgegebenen Speichersollwert vorgesehen ist. Die gezielte Vorgabe des Speichersollwerts stellt einerseits sicher, dass in instationären Zuständen der Brennkraftmaschine eine ausreichende Reagenzmittelmenge zur möglichst vollständigen Beseitigung der NOx-Emissionen der Brennkraftmaschine zur Verfügung steht und dass andererseits ein Reagenzmittelschlupf vermieden wird. Der absolute Reagenzmittel-Füllstand des SCR-Katalysators wird anhand eines Katalysatormodells ermittelt, das den in den SCR-Katalysator einströmenden NOx-Massenstrom, den den SCR-Katalysator verlassenden NOx-Massenstrom, die Katalysatortemperatur sowie gegebenenfalls den Reagenzmittelschlupf berücksichtigt. Der maximal mögliche Reagenzmittel-Füllstand des SCR-Katalysators hängt insbesondere von der Betriebstemperatur des SCR-Katalysators ab. Der maximal mögliche Reagenzmittel-Füllstand ist bei geringen Betriebstemperaturen am höchsten und fällt mit zunehmender Betriebstemperatur zu kleineren Werten ab. Anstelle des absoluten Reagenzmittel-Füllstands wird daher der relative Reagenzmittel-Füllstand betrachtet, der auf den unter den gegebenen Betriebsbedingungen des Katalysators möglichen maximalen Reagenzmittel-Füllstand bezogen ist.

Die Reduktion von Stickoxiden ist nur möglich, wenn die Harnstoff-Wasser-Lösung eine vorgegebene Konzentration beziehungsweise bestimmte Qualität aufweist. Bei Befüllung des Harnstoff-Wasser-Lösungs-Tanks mit einer Harnstoff-Wasser-Lösung minderer Qualität oder gar mit einem falschen Reagenzmittels beziehungsweise einer Vorstufe eines Reagenzmittels ist dagegen eine Reduktion der Stickoxide im Abgas der Verbrennungseinheit nicht sichergestellt.

In der DE 10 2006 055 235 A1 (nicht vorveröffentlicht) ist ein Diagnoseverfahren für eine Harnstoff-Wasser-Lösung beschrieben, bei welchem während einer vorgebbaren Zeitdauer nach einem Befüllen des Harnstoff-Wasser-Lösungs-Tanks das Signal eines stromabwärts nach einem SCR-Katalysator angeordneten Abgassensors zur Ermittlung der Stickoxid-beziehungsweise Ammoniakkonzentration mit vorgebbaren Vergleichswerten verglichen wird und bei Abweichung des Signals von den Vergleichswerten um vorgebbare Schwellenwerte auf eine Harnstoff-Wasser-Lösung minderer Qualität geschlossen wird.

In der EP 1 426 575 A ist ein weiteres Dizgnosemerfahren beschrieben.

Der Erfindung liegt die Aufgabe zugrunde, ein Diagnoseverfahren für ein in einen Abgasbereich einer Brennkraftmaschine einzubringendes Reagenzmittel sowie eine Vorrichtung zur Durchführung des Verfahrens anzugeben, die einfach realisierbar sind.

Die Aufgabe wird durch die in den unabhängigen Ansprüchen angegebenen Merkmale jeweils gelöst.

### Offenbarung der Erfindung

Die erfindungsgemäße Vorgehensweise mit den Merkmalen des unabhängigen Verfahrensanspruchs weist den Vorteil auf, dass lediglich der stromabwärts nach dem Katalysator auftretende Reagenzmittelschlupf gemessen werden muss. Die Verfahrensschritte können anhand von vorhandenen, in einem Steuergerät bekannten Größen durchgeführt werden, so dass ein minimaler Aufwand erforderlich ist.

Die erfindungsgemäße Vorgehensweise ermöglicht das Erkennen der Qualität des verwendeten Reagenzmittels. Durch das Erkennen einer schlechten Qualität oder das Feststellen eines falschen Reagenzmittels kann ein Warnhinweis erfolgen. Die erfindungsgemäße Vorgehensweise trägt deshalb zur Sicherstellung einer gleichbleibend hohen Konvertierung von unerwünschten Bestandteilen des Abgases einer Brennkraftmaschine bei.

Vorteilhafte Weiterbildungen und Ausgestaltungen der erfindungsgemäße Vorgehensweise ergeben sich aus abhängigen Ansprüchen.

Eine Ausgestaltung sieht vor, dass bei Vorliegen eines ersten und zweiten Freigabesignals eine Mittelwertbildung der aufgetretenen und nicht aufgetretenen Überschreitungen eines Reagenzmittelschlupf-Schwellenwerts vorgesehen wird und dass dem Reagenzmittel eine ausreichende Qualität zugeordnet wird, wenn ein Mittelwert-Schwellenwert überschritten wird. Dadurch werden die Sicherheit der Diagnose erhöht und Fehldiagnosen aufgrund von sporadischen Ereignissen oder Störsignalen vermieden.

Die erfindungsgemäße Vorrichtung zur Durchführung des Verfahrens betrifft zunächst ein Steuergerät, das speziell hergerichtete Mittel zur Durchführung des Verfahrens aufweist. Das Steuergerät enthält vorzugsweise wenigstens einen elektrischen Speicher, in welchem die Verfahrensschritte als Steuergerätprogramm abgelegt sind.

Das Steuergerät enthält eine Reagenzmittel-Füllstands-Ermittlung zur Ermittlung des relativen Reagenzmittel-Füllstands, eine Laständerungs-Ermittlung zur Ermittlung einer Änderung der Last der Brennkraftmaschine bezogen auf die Zeit sowie einen Reagenzmittelschlupf-Vergleicher zum Vergleichen des Reagenzmittelschlupfs mit einem Reagenzmittelschlupf-Schwellenwert.

Eine Ausgestaltung der erfindungsgemäßen Vorrichtung sieht als Abgassensor einen NOx-Sensor vor, der eine Querempfindlichkeit gegenüber dem Reagenzmittel aufweist. Alternativ kann als Abgassensor ein Sensor eingesetzt werden, dessen Empfindlichkeit speziell gegenüber dem Reagenzmittel ausgebildet ist. Sofern als Reagenzmittel eine Harnstoff-Wasser-Lösung vorgesehen ist, aus welcher das Reagenzmittel Ammoniak gewonnen wird, kann als Abgassensor ein NH3-Sensor vorgesehen sein.

Das erfindungsgemäße Steuergerätprogramm sieht vor, dass alle Schritte des erfindungsgemäßen Verfahrens ausgeführt werden, wenn es im Steuergerät abläuft.

Das erfindungsgemäße Steuergerät-Programmprodukt mit einem auf einem maschinenlesbaren Träger gespeicherten Programmcode führt das erfindungsgemäße Verfahren aus, wenn das Programm im Steuergerät abläuft.

Weitere vorteilhafte Weiterbildungen und Ausgestaltungen der erfindungsgemäßen Vorgehensweise ergeben sich aus weiteren abhängigen Ansprüchen. Ausführungsbeispiele der Erfindung sind in der Zeichnung dargestellt und in der nachfolgenden Beschreibung näher erläutert.

Es zeigen:
- Figur 1: ein technisches Umfeld, in welchem ein erfindungsgemä- ßes Verfahren abläuft und
- Figuren 2a - 2g: Signalverläufe in Abhängigkeit von der Zeit.

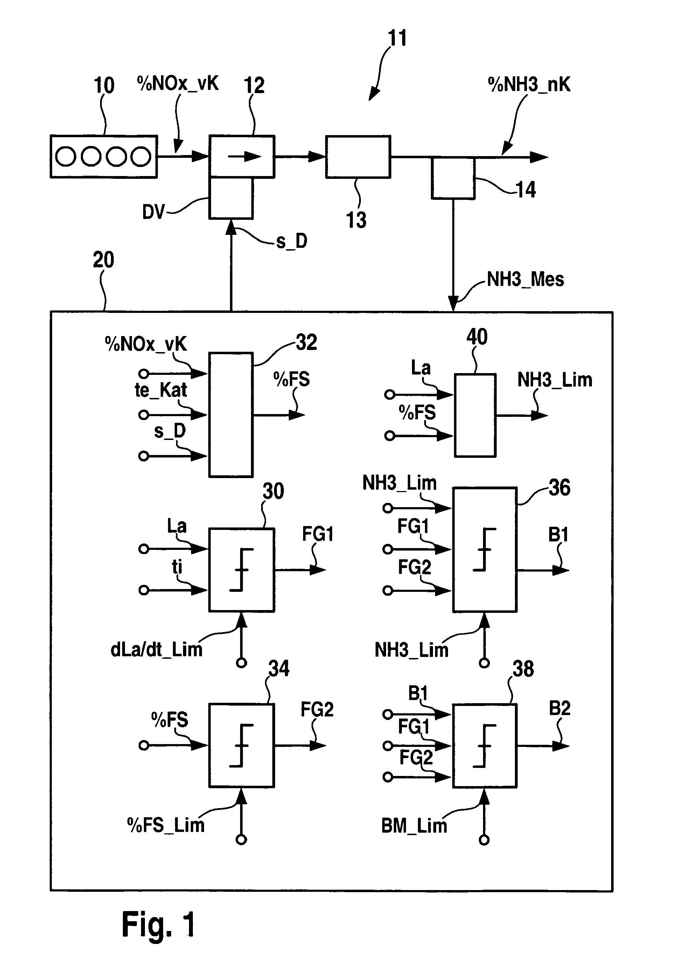

Figur 1 zeigt eine Brennkraftmaschine 10, in deren Abgasbereich 11 eine Reagenzmittel-Einbringvorrichtung 12, ein Katalysator 13 sowie ein Abgassensor angeordnet sind. Stromaufwärts vor dem Katalysator 13 treten eine NOx-Konzentration % NOx_vK und stromabwärts nach dem Katalysator 13 ein Reagenzmittelschlupf % NH3_nK auf.

Der Reagenzmittel-Einbringvorrichtung 12 ist ein Dosierventil DV zugeordnet, welches von einem Steuergerät 20 mit einem Dosiersignal s_D beaufschlagt wird. Der Abgassensor 14 stellt dem Steuergerät 20 ein Reagenzmittelschlupf-Messsignal NH3_Mes zur Verfügung.

Das Abgas der Brennkraftmaschine 10 enthält zumindest eine unerwünschte Abgaskomponente, welche der Katalysator 13 vermindern soll. Eine solche unerwünschte Abgaskomponente ist beispielsweise die NOx-Konzentration % NOx_vK, welche im Katalysator 13 in weniger schädliche Verbindungen konvertiert werden soll. Ausgegangen wird davon, dass der Katalysator 13 zur Konvertierung ein Reagenzmittel benötigt, welches in das Abgas stromaufwärts vor den Katalysator 13 eingebracht wird. Das Reagenzmittel kann beispielsweise innermotorisch eingebracht werden. Im gezeigten Ausführungsbeispiel wird davon ausgegangen, dass das Reagenzmittel über die Reagenzmittel-Einbringvorrichtung 12 in das Abgas dosiert wird. Die Reagenzmittelmenge wird vom Dosierventil DV festgelegt, welches mit dem Dosiersignal s_D beaufschlagt wird. Das Dosiersignal s_D legt das Steuergerät 20 vorzugsweise anhand von bekannten Betriebsgrößen der Brennkraftmaschine 10 wie beispielsweise der Drehzahl oder der Last La fest.

Als Maß für die Last La der Brennkraftmaschine 10 kann beispielsweise die Stellung eines nicht näher gezeigten Fahrpedals herangezogen werden, sofern die Brennkraftmaschine 10 als Antrieb in einem Kraftfahrzeug vorgesehen ist. Als Maß für die Last La kann weiterhin ein von der Brennkraftmaschine 10 aufzubringendes beziehungsweise bereitgestelltes Drehmoment herangezogen werden. Zusätzlich können die der Brennkraftmaschine 10 zugeführte Luftmenge und/oder eine Abgasrückführrate berücksichtigt werden.

Im gezeigten Ausführungsbeispiel wird davon ausgegangen, dass der Katalysator 13 als SCR-Katatysator ausgestaltet ist, welcher die NOx-Anteile des Abgases mit dem Reagenzmittel Ammoniak konvertiert. Das Ammoniak kann beispielsweise aus einer Harnstoff-Wasser-Lösung als Vorstufe des Reagenzmittels durch Thermolyse im Abgasbereich 11 erhalten werden, wobei die Harnstoff-Wasser-Lösung über die Reagenzmittel-Einbringvorrichtung 12 in den Abgasbereich 11 eingesprüht wird.

Zum Einhalten einer möglichst hohen Konvertierungsrate ist es erforderlich, dass das Reagenzmittel, im gezeigten Ausführungsbeispiel die Harnstoff-Wasser-Lösung, eine bestimmte Beschaffenheit aufweist. Bei einer Harnstoff-Wasser-Lösung wird beispielsweise von einer 32 % Harnstoff-Wasser-Lösung ausgegangen. Wenn der Wasseranteil entweder versehentlich oder in betrügerischer Absicht erhöht wird, oder wenn ein völlig falsches Reagenzmittel verwendet wird, kann die angestrebte Konvertierungsrate nicht mehr erreicht werden, so dass gesetzliche Vorgaben zur Abgasreinigung nicht mehr erfüllt werden.

Das erfindungsgemäße Verfahren sieht deshalb eine Diagnose des in den Abgasbereich 11 der Brennkraftmaschine 10 einzubringenden Reagenzmittels beziehungsweise einer Vorstufe des Reagenzmittels vor. Die Diagnose beruht darauf, dass bei einem hohen Reagenzmittel-Füllstand im Katalysator 13, welcher das Reagenzmittel speichern kann, und bei einem gleichzeitig auftretenden Lastsprung der Brennkraftmaschine 10, welcher zu einer Erhöhung der Dosierung des Reagenzmittels führt, ein Reagenzmittelschlupf % NH3_nK auftritt, die vom Abgassensor 14 erfasst und als Reagenzmittelschlupf-Messsignal NH3_Mes dem Steuergerät 20 zur Verfügung gestellt wird. Wenn ein derartiger Reagenzmittelschlupf % NH3_nK unter den genannten Voraussetzungen nicht detektiert werden kann, und die Komponenten der gesamten Abgasreinigungsanlage ansonsten in Ordnung sind, kann davon ausgegangen werden, dass ein falsches oder ein unzureichendes Reagenzmittel beziehungsweise eine Vorstufe des Reagenzmittels in den Abgasbereich 11 eingebracht wurde.

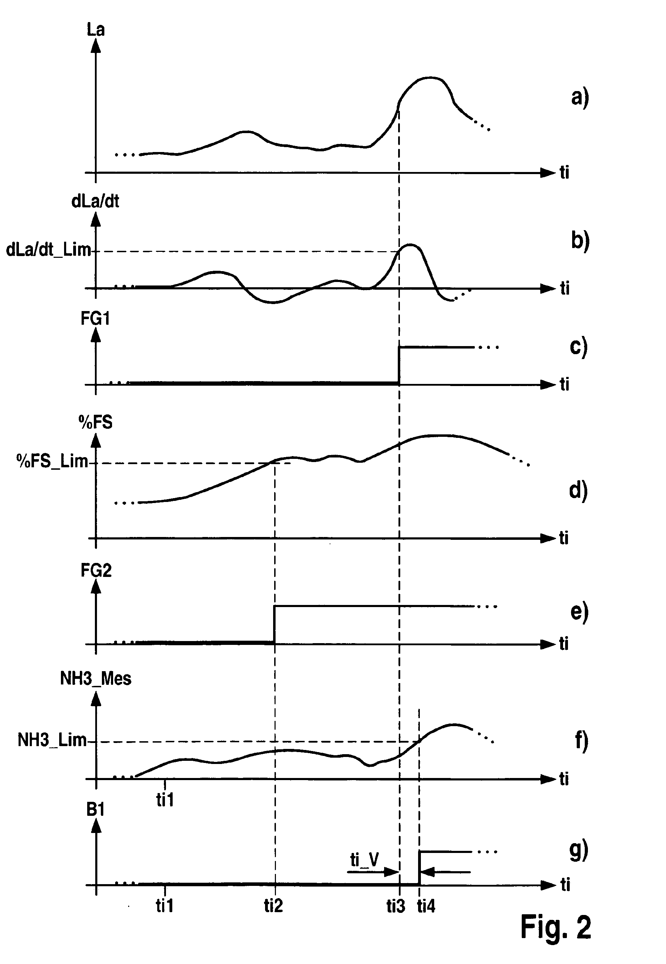

Zunächst wird eine Laständerung der Brennkraftmaschine 10 erfasst. Der zeitliche Verlauf der Last La ist in Figur 2a gezeigt, wobei angenommen wird, dass das Diagnoseverfahren zu einem ersten Zeitpunkt ti1 startet. Einer Laständerungs-Ermittlung 30 werden die Last La, die Zeit ti sowie ein Laständerungs-Schwellenwert dLa/dt_Lim zur Verfügung gestellt. Die Laständerungs-Ermittlung 30 ermittelt eine zeitliche Laständerung vorzugsweise anhand des Differenzenquotienten der Last La. Figur 2b zeigt das Last-Änderungssignal dLa/dt in Abhängigkeit von der Zeit ti. Es wird angenommen, dass das Last-Änderungssignal dLa/dt den Laständerungs-Schwellenwert dLa/dt_Lim zu einem dritten Zeitpunkt ti3 überschreitet, sodass zum dritten Zeitpunkt ti3 ein erstes Freigabesignal FG1 von der Laständerungs-Ermittlung 30 bereitgestellt wird. Das erste Freigabesignal FG1 kann aus applizierbaren Kennfeldern der Eingangsgrößen der Laständerungs-Ermittlung 30 berechnet werden.

Ausgegangen wird davon, dass mit dem Auftreten des ersten Freigabesignals FG1 eine entsprechende Erhöhung der Dosierung des Reagenzmittels stattfindet, wobei im Hinblick auf die Speicherkapazität des Katalysators 13 gegenüber dem Reagenzmittel eine Überdosierung des Reagenzmittels auftreten kann, die einen erhöhten Reagenzmittelschlupf % NH3_nK zur Folge hat. Ein starkes Ansteigen des Reagenzmittelschlupf % NH3_nK tritt jedoch nur auf, wenn die Speicherkapazität des Katalysators 13 weitgehend vor der Erhöhung der Dosierung ausgeschöpft ist.

Es ist deshalb weiterhin vorgesehen, den relativen Reagenzmittel-Füllstand % FS im Katalysator 13 in einer Reagenzmittel-Füllstands-Ermittlung 32 zu ermitteln, welcher die NOx-Konzentration % NOx_vK, die Temperatur te_Kat des Katalysators 13 sowie das Dosiersignal s_D zur Verfügung gestellt werden. Die Ermittlung des relativen Reagenzmittel-Füllstands % FS kann dem eingangs genannten Stand der Technik gemäß DE 10 2004 031 624 A1 im Detail entnommen werden, auf welchen ausdrücklich Bezug genommen wird.

Die Ermittlung des relativen Reagenzmittel-Füllstands % FS anstelle des absoluten Reagenzmittel-Füllstands ist besonders zweckmäßig, weil die Reagenzmittel-Speicherfähigkeit eines SCR-Katalysators 13 stark von der Temperatur abhängt, wobei ein bestimmter absoluter Reagenzmittel-Füllstand bei einer niedrigen Katalysator-Temperatur te_Kat einem vergleichsweise geringen relativen Reagenzmittel-Füllstand % FS und bei einer hohen Katalysator-Temperatur te_Kat einem vergleichsweise hohen relativen Reagenzmittel-Füllstand % FS entspricht. In Figur 2d ist ein möglicher Verlauf des relativen Reagenzmittel-Füllstands % FS gezeigt, wobei ein relativer Füllstands-Schwellenwert % FS_Lim eingetragen ist, welcher zu einem zweiten Zeitpunkt ti2 überschritten wird. In einem Füllstands-Vergleicher 34 wird der relative Reagenzmittel-Füllstand % FS mit dem relativen Füllstands-Schwellenwert % FS_Lim verglichen. Der Füllstands-Vergleicher 34 stellt ein zweites Freigabesignal FG2 bereit, wenn der relative Reagenzmittel-Füllstand % FS den relativen Füllstands-Schwellenwert % FS_Lim überschreitet. Das zweite Freigabesignal FG2 kann aus applizierbaren Kennfeldern der Eingangsgrößen des Füllstands-Vergleichers 34 berechnet werden. Der relative Füllstands-Schwellenwert % FS_Lim wird dadurch beispielsweise auf mindestens 70 Prozent festgelegt. Das Überschreiten des relativen Füllstands-Schwellenwerts % FS_Lim tritt gemäß Figur 2d zum zweiten Zeitpunkt ti2 auf und führt gemäß Figur 2e zum Bereitstellen des zweiten Freigabesignals FG2.

Die vorgesehene Erfassung und Bewertung des Reagenzmittelschlupfs % NH3_nK beruht darauf, dass bei vorliegendem ersten und zweiten Freigabesignal FG1, FG2 von einer Überdosierung des Reagenzmittels ausgegangen wird. Ein Reagenzmittelschlupf-Vergleicher 36 vergleicht das Reagenzmittelschlupf-Messsignal NH3_Mes mit einem Reagenzmittelschlupf-Schwellenwert NH3_Lim, wobei der Reagenzmittelschlupf-Vergleicher 36 ein erstes Bewertungssignal B1 bereitstellt, wenn das Reagenzmittelschlupf-Messsignal NH3_Mes den Reagenzmittelschlupf-Schwellenwert NH3_Lim überschreitet. Das Reagenzmittelschlupf-Messsignal NH3_Mes einschließlich des Reagenzmittelschlupf-Schwellenwerts NH3_Lim sind in Figur 2f gezeigt, wobei die Überschreitung des Reagenzmittelschlupf-Schwellenwerts NH3_Lim zu einem vierten Zeitpunkt ti4 auftritt. Die Überschreitung führt gemäß Figur 2g zum vierten Zeitpunkt ti4 zum Bereitstellen des ersten Bewertungssignals B1.

Aufgrund der dynamischen Vorgänge im Katalysator 13 sowie aufgrund der Laufzeit des Abgases im Abgasbereich 11 wird vorzugsweise zwischen dem dritten und vierten Zeitpunkt ti3, ti4 eine kleine Verzögerungszeit ti_V eingeplant. Die Verzögerungszeit ti_V wird dem Reagenzmittelschlupf-Vergleicher 36 zur Verfügung gestellt.

Das Auftreten des ersten Bewertungssignals B1 bedeutet, dass eine erwartete Reaktion aufgetreten ist, sodass davon ausgegangen werden kann, dass das Reagenzmittel eine vorgegebene Qualität aufgewiesen hat. Sofern trotz des Vorliegens der beiden Freigabesignale FG1, FG2 kein erstes Bewertungssignal B1 auftritt, muss davon ausgegangen werden, dass das Reagenzmittel oder die Vorstufe des Reagenzmittels keine ausreichende Qualität aufweist oder sogar ein falsches Reagenzmittel eingesetzt wurde.

Zur Erhöhung der Zuverlässigkeit des erfindungsgemäßen Diagnoseverfahrens kann gemäß einer Ausgestaltung vorgesehen sein, dass nicht jedes Auftreten des ersten Bewertungssignals B1 oder ein entsprechendes Ausbleiben des ersten Bewertungssignals B1 zur unmittelbaren Aussage herangezogen wird, ob eine ausreichende Qualität des Reagenzmittels vorliegt oder nicht. Vorgesehen ist deshalb ein Mittelwert-Vergleicher 38, dem das erste Bewertungssignal B1, das erste und zweite Freigabesignal FG1, FG2 sowie ein Mittelwert-Schwellenwert BM_Lim zur Verfügung gestellt werden. Der Mittelwert-Vergleicher 38 stellt ein zweites Bewertungssignal B2 bereit, wenn ein Mittelwert des Auftretens beziehungsweise des Nichtauftretens des ersten Bewertungssignals B1 den Mittelwert-Schwellenwert BM_Lim überschreitet. Bei einem Auftreten des zweiten Bewertungssignals B2 wird davon ausgegangen, dass eine ausreichende Qualität des Reagenzmittels vorgelegen hat.

Gemäß einer anderen Ausgestaltung ist vorgesehen, dass der Reagenzmittel-Schwellenwert NH3_Lim von der Last La der Brennkraftmaschine 10 und/oder vom relativen Reagenzmittel-Füllstand % FS abhängt. Eine Reagenzmittelschlupf-Schwellenwert-Festlegung 40 enthält beispielsweise Kennlinienfelder, durch welche der Zusammenhang festgelegt ist.

## Patentansprüche

1. Diagnoseverfahren für ein in einen Abgasbereich (11) einer Brennkraftmaschine (10) einzubringendes Reagenzmittel oder einer Vorstufe des Reagenzmittels, welches zur Konvertierung wenigstens einer Abgaskomponente in einem Katalysator (13) erforderlich ist, **dadurch gekennzeichnet, dass** eine Änderung der Last (La) der Brennkraftmaschine (10) bezogen auf die Zeit (ti) ermittelt und beim Überschreiten eines Laständerungs-Schwellenwerts (dLa/dt_Lim) ein erstes Freigabesignal (FG1) bereitgestellt wird, dass der relative Reagenzmittel-Füllstand (% FS) im Katalysator (14) ermittelt und beim Überschreiten eines relativen Füllstands-Schwellenwerts (% FS_Lim) ein zweites Freigabesignal (FG2) bereitgestellt wird, dass der stromabwärts nach dem Katalysator (13) auftretende Reagenzmittelschlupf (% NH3_nK) mit einem Reagenzmittelschlupf-Schwellenwert (NH3_Lim) verglichen wird und dass bei Vorliegen des ersten und zweiten Freigabesignals (FG1, FG2) dem Reagenzmittel eine ausreichende Qualität zugeordnet wird, wenn der gemessene Reagenzmittelschlupf (% NH3_nK) den Reagenzmittelschlupf-Schwellenwert (NH3_Lim) überschreitet.

2. Verfahren nach Anspruch 1, **dadurch gekennzeichnet, dass** bei Vorliegen des ersten und zweiten Freigabesignals (FG1, FG2) eine Mittelwertbildung der aufgetretenen und der nicht aufgetretenen Überschreitungen des Reagenzmittelschlupf-Schwellenwerts (NH3_Lim) vorgenommen wird und dass dem Reagenzmittel eine ausreichende Qualität zugeordnet wird, wenn der Mittelwert einen Mittelwert-Schwellenwert (BM_Lim) überschreitet.

3. Verfahren nach Anspruch 1 oder 2, **dadurch gekennzeichnet, dass** nach dem letzten aufgetretenen Freigabesignal (FG1, FG2) eine Verzögerungszeit (ti_V) abgewartet wird, bevor der Reagenzmittelschlupf (% NH3_nK) mit dem Reagenzmittelschlupf-Schwellenwert (NH3_Lim) verglichen wird.

4. Diagnosevorrichtung für ein in einen Abgasbereich (11) einer Brennkraftmaschine (10) einzubringendes Reagenzmittel oder einer Vorstufe des Reagenzmittels, welches zur Konvertierung wenigstens einer Abgaskomponente in einem Katalysator (13) erforderlich ist, **dadurch gekennzeichnet, dass** ein Steuergerät (20) mit Mitteln (30, 32, 34, 36) zur Durchführung des Verfahrens nach einem der vorhergehenden Ansprüchen vorgesehen ist.

5. Diagnosevorrichtung nach Anspruch 4, **dadurch gekennzeichnet, dass** das Steuergerät (20) eine Laständerungs-Ermittlung (30) zur Ermittlung einer Änderung der Last (La) der Brennkraftmaschine (10) bezogen auf die Zeit (ti), eine Reagenzmittel-Füllstands-Ermittlung (32) zur Ermittlung des relativen Reagenzmittel-Füllstands (% FS), einen Füllstands-Vergleicher (34) zum Vergleichen des relativen Reagenzmittel-Füllstands (% FS) im Katalysator (13) mit einem relativen Füllstands-Schwellenwert (% FS_Lim) sowie einen Reagenzmittelschlupf-Vergleicher (36) zum Vergleichen eines Reagenzmittelschlupfs (NH3_Mes) mit dem Reagenzmittelschlupf-Schwellenwert (NH3_Lim) enthält.

6. Diagnosevorrichtung nach Anspruch 4, **dadurch gekennzeichnet, dass** als Abgassensor (14) ein NOx-Sensor vorgesehen ist, der eine Querempfindlichkeit gegenüber dem Reagenzmittel aufweist.

7. Diagnosevorrichtung nach Anspruch 4, **dadurch gekennzeichnet, dass** als Abgassensor (14) ein NH3-Sensor vorgesehen ist.

8. Diagnosevorrichtung nach Anspruch 4, **dadurch gekennzeichnet, dass** als Reagenzmittel eine Harnstoff-Wasser-Lösung vorgesehen ist.

9. Steuergerätprogramm, das alle Schritte eines Verfahrens nach einem der Ansprüche 1 bis 3 ausführt, wenn das Programm in einem Steuergerät (20) abläuft.

10. Steuergerät-Programmprodukt mit einem auf einem maschinenlesbaren Träger gespeicherten Programmcode zur Durchführung des Verfahrens nach einem der Ansprüche 1 bis 3, wenn das Programm in einem Steuergerät (20) ausgeführt wird.

## Claims

1. Diagnostic method for a reagent to be introduced into an exhaust-gas region (11) of an internal combustion engine (10), or of a precursor of the reagent, which reagent is required for the conversion of at least one exhaust-gas component in a catalytic converter (13), **characterized in that** a change in the load (La) of the internal combustion engine (10) over time (ti) is determined, and a first enable signal (FG1) is provided in the event of an exceedance of a load change threshold value (dLa/dt_Lim), **in that** the relative reagent filling level (% FS) in the catalytic converter (13) is determined, and a second enable signal (FG2) is provided in the event of an exceedance of a relative filling level threshold value (% FS_Lim), **in that** the reagent slippage (% NH3_nK) occurring downstream of the catalytic converter (13) is compared with a reagent slippage threshold value (NH3_Lim), and **in that**, if the first and second enable signals (FG1, FG2) are present, the reagent is regarded as being of an adequate quality if the measured reagent slippage (% NH3_nK) exceeds the reagent slippage threshold value (NH3_Lim).

2. Method according to Claim 1, **characterized in that**, if the first and second enable signals (FG1, FG2) are present, a mean value of the exceedances, which have and have not occurred, of the reagent slippage threshold value (NH3_Lim) is formed, and **in that** the reagent is regarded as being of an adequate quality if the mean value exceeds a mean value threshold value (BM_Lim).

3. Method according to Claim 1 or 2, **characterized in that** the reagent slippage (% NH3_nK) is compared with the reagent slippage threshold value (NH3_Lim) only after a delay time (ti_V) has elapsed since the enable signal (FG1, FG2) which occurred most recently.

4. Diagnostic device for a reagent to be introduced into an exhaust-gas region (11) of an internal combustion engine (10), or of a precursor of the reagent, which reagent is required for the conversion of at least one exhaust-gas component in a catalytic converter (13), **characterized in that** a control unit (20) is provided with means (30, 32, 34, 36) for carrying out the method according to one of the preceding claims.

5. Diagnostic device according to Claim 4, **characterized in that** the control unit (20) comprises a load change determining means (30) for determining a change in the load (La) of the internal combustion engine (10) over time (ti), a reagent filling level determining means (32) for determining the relative reagent filling level (% FS), a filling level comparison means (34) for comparing the relative reagent filling level (% FS) in the catalytic converter (13) with a relative filling level threshold value (% FS_Lim), and a reagent slippage comparison means (36) for comparing a reagent slippage (NH3_Mes) with the reagent slippage threshold value (NH3_Lim).

6. Diagnostic device according to Claim 4, **characterized in that**, as an exhaust-gas sensor (14), a NOx sensor is provided which has cross-sensitivity with respect to the reagent.

7. Diagnostic device according to Claim 4, **characterized in that** an NH3 sensor is provided as an exhaust-gas sensor (14).

8. Diagnostic device according to Claim 4, **characterized in that** a urea-water solution is used as reagent.

9. Control unit program which carries out all the steps of a method according to one of Claims 1 to 3 when the program is executed in a control unit (20).

10. Control unit program product having a program code, which is stored on a machine-readable carrier, for carrying out the method according to one of Claims 1 to 3 when the program is executed in a control unit (20).

## Revendications

1. Dispositif de diagnostic pour un réactif devant être introduit dans la zone des gaz d'échappement (11) d'un moteur à combustion interne (10) ou pour un précurseur du réactif, qui est nécessaire pour la conversion d'au moins un composant des gaz d'échappement dans un catalyseur (13), **caractérisé en ce qu'**une variation de la charge (La) du moteur à combustion interne (10) en fonction du temps (ti) est déterminée et en cas de dépassement d'une valeur seuil de variation de charge (dLa/dt_Lim), un premier signal de libération (FG1) est produit, **en ce que** le niveau de réactif (% FS) relatif dans le catalyseur (13) est détecté et en cas de dépassement d'une valeur seuil de niveau relative (% FS_Lim), un deuxième signal de libération (FG2) est produit, **en ce que** l'écart de réactif (% NH3_nK) produit en aval du catalyseur (13) est comparé à une valeur seuil d'écart de réactif (NH3_Lim) et **en ce qu'**en présence du premier et du deuxième signal de libération (FG1, FG2), on associe au réactif une qualité suffisante lorsque l'écart de réactif mesuré (% NH3_nK) dépasse la valeur seuil d'écart de réactif (NH3_Lim).

2. Procédé selon la revendication 1, **caractérisé en ce qu'**en présence du premier et du deuxième signal de libération (FG1, FG2), une formation de valeur moyenne des dépassements de la valeur seuil d'écart de réactif (NH3_Lim) produits et non produits est effectuée et **en ce que** l'on associe au réactif une qualité suffisante lorsque la valeur moyenne dépasse une valeur seuil de valeur moyenne (BM_Lim) .

3. Procédé selon la revendication 1 ou 2, **caractérisé en ce qu'**après le dernier signal de libération produit (FG1, FG2), on attend pendant un temps de retard (ti_V) avant de comparer l'écart de réactif (% NH3_nK) avec la valeur seuil d'écart de réactif (NH3_Lim).

4. Dispositif de diagnostic pour un réactif devant être introduit dans la zone des gaz d'échappement (11) d'un moteur à combustion interne (10) ou pour un précurseur du réactif, qui est nécessaire pour la conversion d'au moins un composant des gaz d'échappement dans un catalyseur (13), **caractérisé en ce qu'**il est prévu un appareil de commande (20) avec des moyens (30, 32, 34, 36) pour mettre en oeuvre le procédé selon l'une quelconque des revendications précédentes.

5. Dispositif de diagnostic selon la revendication 4, **caractérisé en ce que** l'appareil de commande (20) contient une détermination de la variation de charge (30) pour déterminer une variation de la charge (La) du moteur à combustion interne (10) en fonction du temps (ti), une détermination du niveau de réactif (32) pour déterminer le niveau de réactif relatif (% FS), un comparateur de niveau (34) pour comparer le niveau de réactif relatif (% FS) dans le catalyseur (13) avec une valeur seuil de niveau relative (% FS_Lim) ainsi qu'un comparateur d'écart de réactif (36) pour comparer un écart de réactif (NH3 Mes) avec la valeur seuil d'écart de réactif (NH3_Lim).

6. Dispositif de diagnostic selon la revendication 4, **caractérisé en ce que** l'on prévoit comme capteur de gaz d'échappement (14) un capteur de NOx, qui présente une sensibilité croisée par rapport au réactif.

7. Dispositif de diagnostic selon la revendication 4, **caractérisé en ce que** l'on prévoit comme capteur de gaz d'échappement (14) un capteur de NH3.

8. Dispositif de diagnostic selon la revendication 4, **caractérisé en ce que** l'on prévoit comme réactif une solution urée-eau.

9. Programme d'appareil de commande qui exécute toutes les étapes d'un procédé selon l'une quelconque des revendications 1 à 3, quand le programme tourne dans un appareil de commande (20).

10. Produit de programme d'appareil de commande comprenant un code programme mémorisé sur un support lisible par machine pour mettre en oeuvre le procédé selon l'une quelconque des revendications 1 à 3, quand le programme est exécuté dans un appareil de commande (20).
